**Europäisches Patentamt**

**European Patent Office**

**Office européen des brevets**

(19)

(11) Numéro de publication : **0 031 747**
**B1**

(12) **FASCICULE DE BREVET EUROPÉEN**

(45) Date de publication du fascicule du brevet :
**13.06.84**

(51) Int. Cl.³ : **B 29 D 23/12**, B 65 H 54/10,
B 65 H 81/00

(21) Numéro de dépôt : **80401766.3**

(22) Date de dépôt : **09.12.80**

(54) **Dispositif de bobinage par enroulement radial d'un filament.**

(30) Priorité : 26.12.79 FR 7931680

(43) Date de publication de la demande :
**08.07.81 Bulletin 81/27**

(45) Mention de la délivrance du brevet :
**13.06.84 Bulletin 84/24**

(84) Etats contractants désignés :
**BE DE GB IT NL**

(56) Documents cités :
**BE-A- 665 595**
**CH-A- 580 490**
**DE-A- 1 779 172**
**DE-A- 2 012 112**
**FR-A- 1 209 847**
**FR-A- 2 359 695**
**US-A- 3 963 185**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Polge, Jacques**
**1, Avenue de Normandie**
**F-91440 Bures Sur Yvette (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention a pour objet un dispositif de bobinage par enroulement radial d'un filament.

On appelle composites les matériaux réalisés à partir d'une matrice de résine thermodurcissable renforcée de filaments, par exemple de filaments de carbone ou de verre. On sait que les pièces composites à fibres continues et correctement orientées sont celles qui présentent les meilleures caractéristiques mécaniques.

On connaît, en particulier par le brevet n° 2 359 695, déposé le 27 juillet 1976 au nom du Commissariat à l'Energie Atomique pour « pièce de révolution de forme plate obtenue par enroulement d'un filament imprégné d'un polymère thermodurcissable », des pièces de révolution obtenues par enroulement sur un mandrin entre deux flasques d'un filament continu imprégné d'un polymère thermodurcissable, puis durcissement de ce dernier. Par cuisson, on obtient ainsi une pièce composite à structure circulaire.

On connaît également des coques de diverses formes où le filament est enroulé à une distance non nulle de l'axe du mandrin suivant des lignes géodésiques (ou voisines de celles-ci).

On connaît également d'autres pièces composites réalisées par l'emploi de nappes unidirectionnelles, parfois livrées préimprégnées, mises en forme à la presse. Mais contrairement aux cas précédents, les fibres ne sont pas tendues lors de la solidification de la matrice et ne sont donc pas disposées de manière à assurer les meilleures caractéristiques mécaniques. Cet inconvénient est encore aggravé par le chevauchement des fils de trame et de chaîne si la nappe de renfort est un tissu.

On connaît, par le document DE-A-1 779 172, un dispositif de fabrication de tuyaux coudés en résine polyester renforcée par des filaments. Ce dispositif comporte un mandrin tournant autour d'un axe et sur lequel est bobiné le fil. L'ensemble tourne autour d'un second axe 6, 6A, orthogonal au premier. Le mandrin 10, 10A coudé en forme d'arc de cercle, se déplace en rotation selon un mouvement de va-et-vient le long d'un profil circulaire. Ce dispositif permet donc d'obtenir un enroulement radial d'un fil sur le mandrin. Cependant, dans un dispositif de ce type, le fil présente toujours une orientation qui fait un angle avec la direction radiale du mandrin sur lequel il est bobiné. Il en résulte une diminution de la résistance de la pièce selon cette direction.

La présente invention a pour objet un dispositif de bobinage qui permet d'obtenir une résistance accrue des pièces selon la direction radiale. Cette résistance accrue est obtenue par la disposition exactement radiale des fils sur la plus grande partie de la pièce. Le dispositif de bobinage selon l'invention d'un fil sur un mandrin en forme de secteur, ledit dispositif comportant un bâti fixe, un arbre monté sur le bâti et tournant autour de son axe, l'axe fixe A, des moyens pour entraîner ledit arbre en rotation, un ensemble tournant solidaire de l'arbre constitué d'un châssis supportant un bras support en forme d'arc de cercle d'axe B, le bras support portant un mandrin à l'une de ses extrémités, la dimension du mandrin suivant son axe de révolution étant petite par rapport à celle suivant la différence des rayons, des moyens pour guider le bras support relativement au châssis dudit ensemble selon un arc de cercle centré sur l'axe B, et des moyens pour entraîner en rotation le bras support autour de l'axe B, est caractérisé en ce que lesdits moyens pour entraîner le bras support réalisent un entraînement discontinu, le mouvement de rotation du bras support se produisant lorsque le fil est en contact avec la partie du mandrin orientée selon son axe de révolution, et en ce que les moyens pour entraîner en rotation le bras support de manière discontinue sont constitués par une denture taillée sur le bras support et par une vis sans fin entraînée en rotation et engrenant avec le secteur denté, ladite vis sans fin étant entraînée en rotation par l'intermédiaire d'une suite cinématique montée dans ledit bâti, ladite suite cinématique se composant d'un réducteur, d'un inverseur monté sur le bâti, d'un couple de pignons coniques à 90° dont l'un d'axe est solidaire du bâti fixe et dont l'autre est immobilisé en rotation sur l'arbre d'entrée du réducteur, ladite suite cinématique comportant en outre une roue à rochet immobilisée en rotation sur l'arbre d'entrée du réducteur, un doigt solidaire du bâti fixe engrenant à chaque passage l'ensemble mobile avec la roue et la faisant ainsi tourner d'un angle déterminé.

D'autres particularités et avantages de l'invention ressortiront mieux de la description qui suit d'un exemple de réalisation donné à titre indicatif et nullement limitatif, en référence aux figures annexées sur lesquelles :

la figure 1 représente un dispositif de bobinage qui ne comporte pas le dispositif d'avance par incrément de l'invention ;

la figure 1a représente un dispositif de bobinage qui comporte un dispositif d'avance par incrément conforme à l'invention.

la figure 2 représente une vue selon la direction II du dispositif représenté sur la figure 1,

la figure 3 représente une vue en coupe selon la ligne III-III de la figure 1,

les figures 4 et 4a illustrent la manière dont le bobinage est réalisé par le dispositif selon l'invention,

les figures 5 à 8 représentent quatre exemples de pièces bobinées conformément au procédé de l'invention.

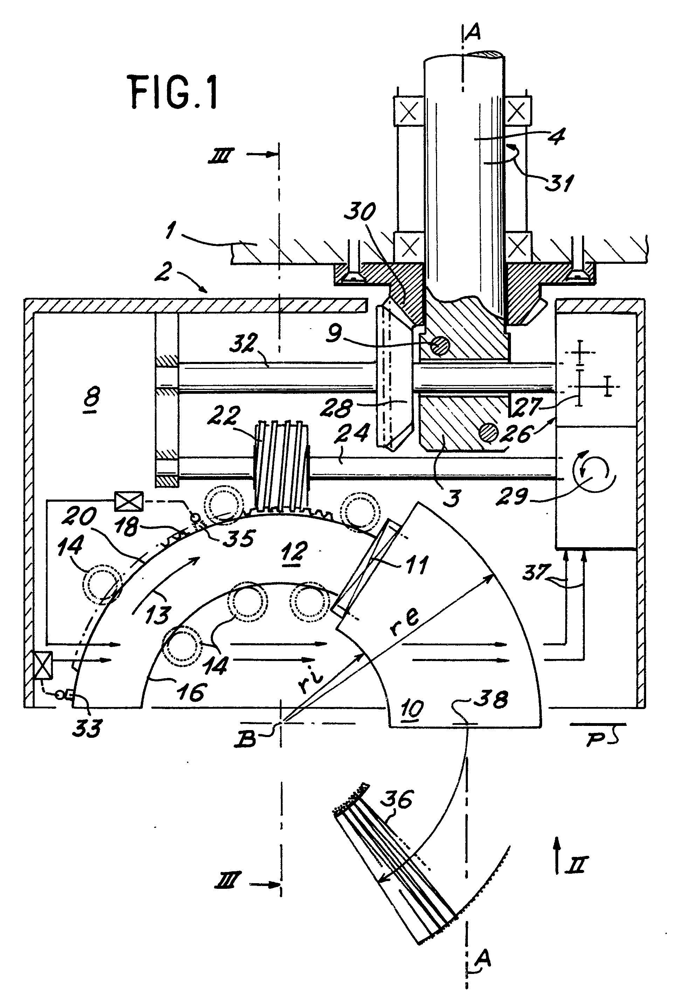

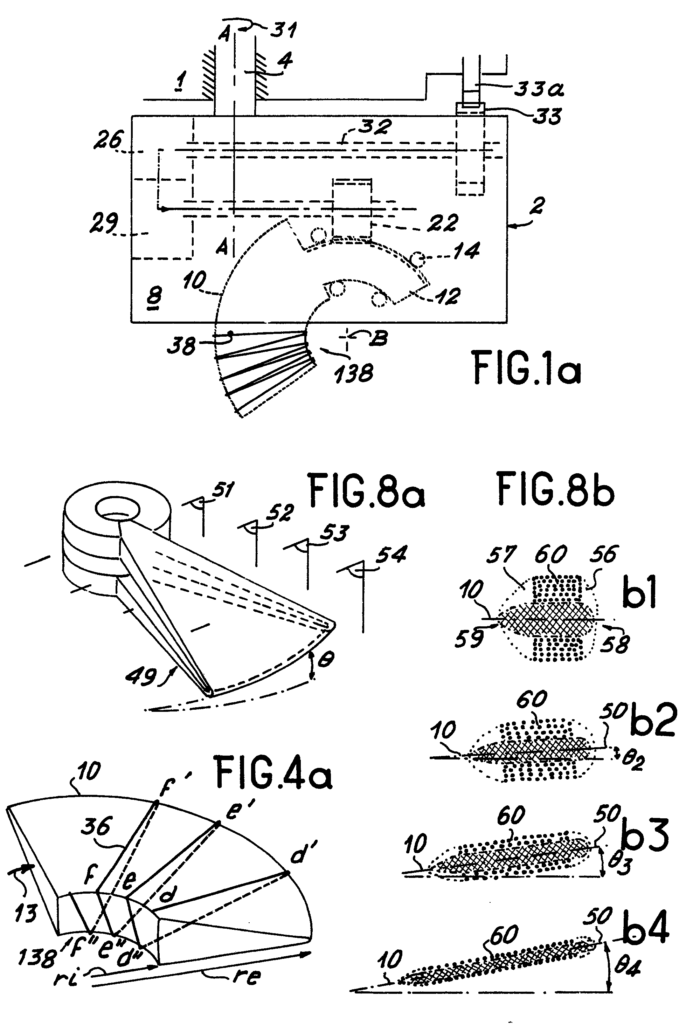

Sur la figure 1, on a représenté un dispositif de bobinage selon l'invention, d'un fil continu sur un mandrin. Ce dispositif comporte un bâti fixe 1 et un ensemble tournant 2. Cet ensemble 2 comprend notamment le châssis 8 porté par l'arbre 4 d'axe A. A l'une des extrémités de cet arbre 4, celle située à l'intérieur du bâti 1, se trouve le moteur, non représenté ; l'autre extrémité aboutit au bloc 3 sur lequel sont fixées par des boulons 9 les deux plaques latérales du châssis 8. Sur ce châssis 8 se trouvent les moyens pour animer le mandrin 10 sur lequel est bobiné le filament d'un mouvement de rotation dans le sens de la flèche 13 autour de l'axe non matérialisé B attaché au châssis 8 et orthogonal à l'axe A. Le mandrin 10 est monté en 11 à une extrémité du bras support 12 en forme d'arc de cercle d'axe B. Des moyens pour guider le bras support 12 selon une trajectoire circulaire centrée sur l'axe B sont prévus. Ils sont constitués par une série de galets 14 répartis selon le périmètre intérieur 16 et le périmètre extérieur 18 du bras support 12.

Une denture 20 taillée dans le bras support 12 transmet à celui-ci le mouvement reçu de la vis sans fin 22 entraînée en rotation par un arbre 24, l'arbre 24 étant lui-même entraîné en rotation par l'intermédiaire d'une suite cinématique composée d'un réducteur 26, d'un inverseur 29 et d'un couple de pignons coniques à 90°, 28 et 30.

Le réducteur 26 est constitué par un train d'engrenages 27 qui réduit la vitesse de rotation de l'arbre 32 par rapport à celle de l'arbre 24. La vitesse de rotation du bras support 12 autour de l'axe B est réduite une nouvelle fois par rapport à celle de l'arbre 24 au moyen de la vis sans fin 22 engrenant dans la denture 20. Ainsi, la vitesse de rotation du bras support 12 est très réduite par rapport à celle de l'ensemble 2 autour de l'axe A.

L'inverseur 29 permet de faire tourner l'arbre 24 dans les deux sens. Ainsi, pour une rotation de l'arbre 4 dans le sens indiqué par la flèche 31, on peut entraîner dans les deux sens le bras support 12, et par suite le mandrin 10. L'inverseur 29 peut être commandé manuellement, ou comme représenté sur la figure 1, par des contacts de fin de course 33 et 35 par l'intermédiaire des fils 37.

En outre, l'inverseur 29 comporte un « point mort » qui permet d'immobiliser l'arbre 24 et par conséquent le bras support 12 par rapport au châssis 8 bien que l'ensemble 2 puisse tourner autour de l'axe A.

Le pignon conique 28 tourne avec l'arbre 32 dont il est solidaire ; le pignon 30 appartenant au bâti fixe 1 reste immobile.

Ainsi, un moteur d'entraînement unique assure l'entraînement de l'ensemble tournant 2 et du bras support 12.

Le fil 36 est dévidé à partir d'un point 38, dont on a représenté la projection sur la figure 1. Le plan de bobinage P est le plan à l'intérieur duquel le fil 36 se déplace au cours du bobinage. Il est géométriquement défini par l'axe B, et par le point 38.

Cependant, un dispositif tel que celui qui vient d'être décrit ne permet pas d'obtenir une disposition exactement radiale des fils. On va maintenant décrire, en référence à la figure 1a, un dispositif de bobinage conforme à l'invention et qui comporte des moyens d'avance par incrément. Ce dispositif comporte un bâti fixe 1 et un ensemble tournant 2.

L'ensemble tournant 2 comprend notamment le châssis 8 porté par l'arbre 4 d'axe A. A l'une des extrémités de cet arbre 4, situé à l'intérieur du bâti 1, se trouve le moteur (non représenté). L'autre extrémité de l'arbre 4 aboutit au bloc sur lequel sont fixées les deux plaques latérales du châssis 8. D'une manière identique à ce qui a été décrit en référence à la figure 1, sur le châssis 8 se trouvent des moyens pour animer le mandrin 10 sur lequel est bobiné le filament d'un mouvement de rotation dans le sens de la flèche 13 autour de l'axe non matérialisé B attaché au châssis 8 et orthogonal à l'axe A. Toujours d'une manière identique au dispositif de la figure 1, ce deuxième mode de réalisation de l'invention comporte des moyens pour guider le bras support 12 selon un arc de cercle centré sur l'axe B. Ces moyens sont constitués par une série de galets 14 répartis selon le périmètre intérieur 16 et le périmètre extérieur 18 du bras support 12.

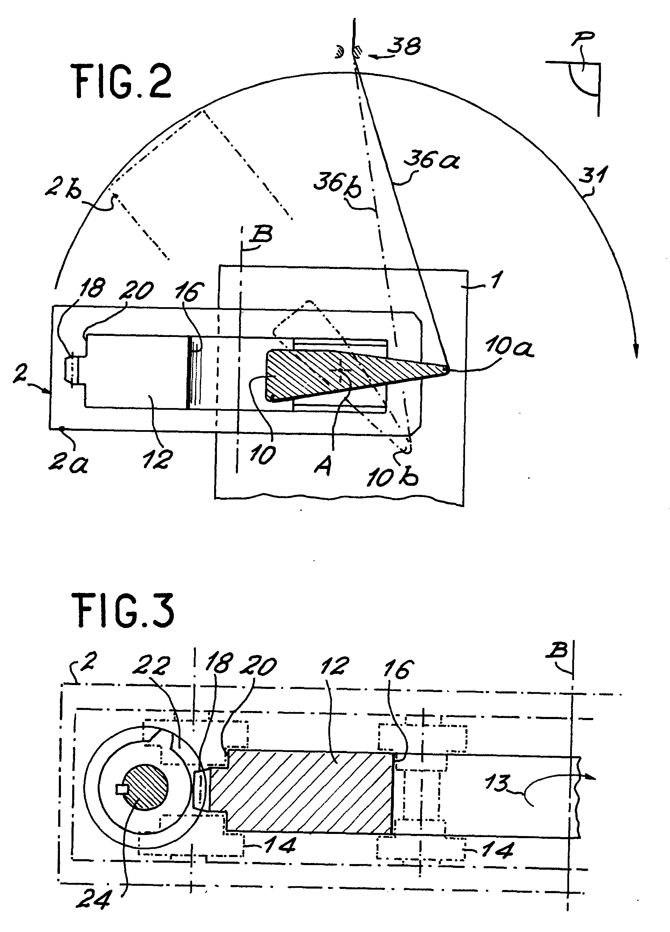

Une denture 20 taillée dans le bras support 12 transmet à celui-ci le mouvement reçu de la vis sans fin 22 entraînée en rotation par un arbre 24. Ces détails de réalisation, identiques à ceux de l'appareil représenté sur la figure 1, n'ont pas été représentés en détail sur la figure 2.

L'invention réside dans les moyens pour entraîner en rotation la vis sans fin 22 engrenant avec la denture 20. Ces moyens sont constitués par une suite cinématique composée d'un réducteur 26, d'un inverseur 29, et d'une roue à rochet 33 immobilisée en rotation sur l'arbre d'entrée 32 du réducteur 26. Un doigt 33a solidaire du bâti fixe 1 engrène avec la roue 33. Ainsi, à chaque passage de l'ensemble mobile 2, le doigt 33a fait tourner d'un angle déterminé la roue 33 et l'arbre 32 entraînant la suite cinématique jusqu'à la vis sans fin 22 qui entraîne à son tour le bras support 12. On réalise ainsi une avance par incrément du bras support 12. Alors que selon la Fig. 1 le bras support 12 était entraîné d'une manière continue, dans ce second mode de réalisation, il est entraîné d'une manière discontinue. Cet entraînement se produit au moment où le fil 36, dévidé à partir du point fixe 38, se trouve en contact avec la partie 138 du mandrin 10 voisine de l'axe B. Grâce à cette disposition, on réalise des pièces pour lesquelles l'orientation des fibres est exactement radiale, sauf dans la partie cylindrique 138 voisine de l'axe B, pour laquelle se produit l'avance par incrément du bras support 12.

Sur la figure 2, on a représenté une vue selon la direction II du dispositif de la figure 1. Cette figure permet de voir en particulier la section du mandrin 10. Le profil de cette section est choisi en fonction de la pièce que l'on désire obtenir. Le mandrin 10 est un secteur dont l'axe coïncide avec l'axe B représenté en traits mixtes. On peut voir également l'intersection avec le plan de la figure de l'axe A autour duquel tourne, selon le sens de la flèche 31, l'ensemble mobile 2 dont on a représenté une première position 2a en trait plein, et une deuxième position 2b en traits mixtes. Le fil 36 à bobiner sur le mandrin 10 est dévidé à partir du point fixe 38. On a représenté en trait continu et en traits mixtes deux positions différentes 36a et 36b de ce fil 36 correspondant respectivement aux deux positions 10a et 10b du mandrin 10.

Il est évident que le point 38 à partir duquel le fil 36 est dévidé doit être situé à une distance suffisante de l'axe A pour que la rotation de l'ensemble mobile 2 soit possible.

Au cours du bobinage, le fil 36 se déplace dans le plan P, qui est le plan de la figure 2.

On a représenté sur la figure 3 une vue en coupe selon la ligne III-III de la figure 1, de l'ensemble 2. Cette figure montre en particulier le bras support 12, sa denture 20, la vis sans fin 22 clavetée sur l'arbre 24, les galets 14 qui guident le bras support 12 selon une trajectoire circulaire centrée sur l'axe B.

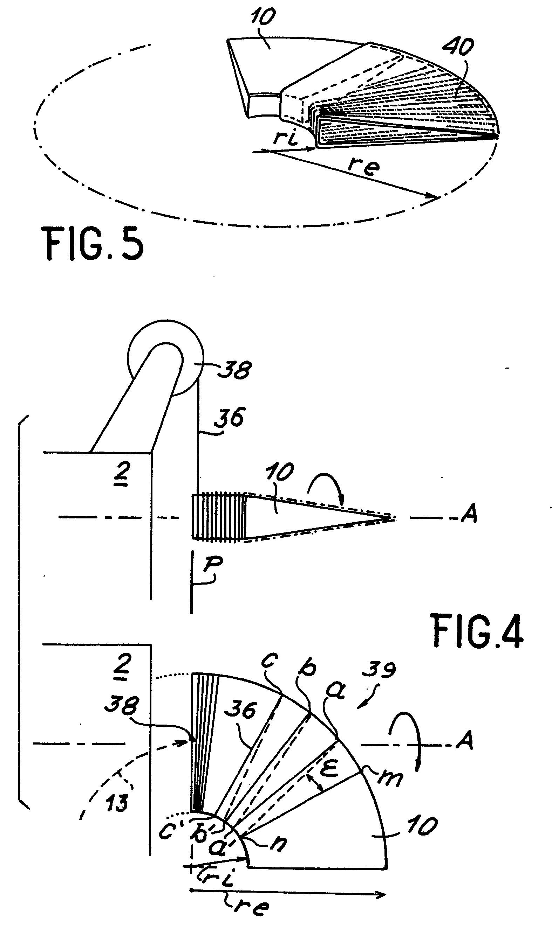

Le fonctionnement du dispositif de bobinage selon l'invention représenté à l'aide des figures 1, 1a, 2 et 3 est illustré sur la figure 4.

On monte sur le bras support 12 un mandrin 10 dont la forme correspond à celle de la pièce à réaliser. Le mandrin 10 peut avoir une section sensiblement triangulaire, comme représenté sur la figure 2, mais il peut également avoir une autre forme convexe quelconque.

On amène le fil 36 dans le plan P de bobinage (figure 4), à l'intérieur duquel il se déplace au cours du bobinage. Il est enroulé tendu sur le mandrin 10, grâce à une première rotation de celui-ci. L'inverseur 29 étant au point mort, le fil 36 décrit une courbe méridienne mn, c'est-à-dire une courbe définie par l'intersection du plan de bobinage P et du pourtour du mandrin 10.

Dans le dispositif selon l'art antérieur (Fig. 1) l'inverseur 26 étant en position de marche avant, le fil 36 s'applique sur le mandrin 10 suivant une direction inclinée sur la méridienne mn d'un petit angle ε de valeur :

$$\varepsilon = \frac{r_i}{r_e - r_i} \times \alpha,$$

α étant l'angle de rotation du mandrin 10 autour de l'axe B lorsque l'ensemble mobile 2 effectue une rotation continue de 180° autour de l'axe A ; $r_i$ et $r_e$ étant respectivement les rayons intérieur et extérieur du mandrin 10.

Si l'on désigne par 2k le rapport de la vitesse de rotation de l'ensemble mobile 2 autour de l'axe A à celle du mandrin 10 autour de l'axe B attaché à l'ensemble mobile 2, la formule précédente devient :

$$\varepsilon = \frac{r_i}{r_e - r_i} \times \frac{\pi}{k}.$$

On a représenté dans la zone 39 l'enroulement du fil 36 sur le mandrin 10, l'angle ε ayant été volontairement exagéré pour rendre la figure plus lisible. On remarque que les spires sont plus espacées sur le rayon extérieur $r_e$ aux points a, b, c, qu'aux points correspondants a', b', c', sur le rayon intérieur $r_i$ ; cela conduit à un renfort plus épais au centre que sur le bord de la pièce.

La figure 4a illustre le fonctionnement du dispositif de bobinage selon l'invention.

D'une manière identique à ce qui a été décrit en référence à la figure 4, on monte sur le bras support 12 un mandrin 10, dont la forme correspond à celle de la pièce à réaliser. On amène le fil 36 dans le plan P de bobinage, on l'enroule tendu sur le mandrin 10 grâce à une première rotation de celui-ci autour de l'axe A. L'inverseur 29 étant au point mort, le fil 36 décrit une courbe méridienne mn.

L'inverseur 26 étant en position de marche avant, le fil 36 s'applique sur le mandrin 10 suivant une direction parfaitement radiale, et non plus selon une direction inclinée sur la méridienne mn d'un angle de valeur ε, comme c'était le cas pour le dispositif de la figure 1.

Sur la figure 4a, on a représenté l'enroulement d'une spire d, d' selon une direction parfaitement radiale, puis d', d'' toujours selon une direction parfaitement radiale. L'avance du bras support 12 se produit par incrément selon le sens de la flèche 13 au moment où le fil 36 s'applique sur la partie cylindrique 138 du mandrin 10 voisine de l'axe B. Le fil 36 s'applique ainsi obliquement selon une direction d'' e sur le mandrin 10. La spire suivante e, e', e'' présente de la même manière une direction parfaitement radiale. Une nouvelle avance du bras support 12 se produit alors, ce qui correspond à une nouvelle inclinaison du fil selon la direction e'' f, avant le bobinage d'une troisième spire radiale f, f', f'' et ainsi de suite.

Si l'on désigne comme précédemment par α l'angle de rotation du mandrin 10 autour de l'axe B lorsque l'ensemble mobile 2 effectue une rotation de 180 degrés autour de l'axe A, la rotation correspondante du mandrin 10 entre les points d'' e et e'' f est égale à 2α, puisque l'avance du mandrin 10 a lieu une seule fois par tour.

On remarque que les spires sont plus espacées sur le rayon extérieur $r_e$ aux points d', e', f' qu'aux points correspondants d, e, f, et d'', e'', f'', sur le rayon intérieur $r_i$. Cela conduit à un renfort plus épais au centre que sur le bord de la pièce.

L'inverseur 26 étant en position de marche arrière, le fil 36 est bobiné également d'une manière parfaitement radiale. Cependant, l'inclinaison du fil dans la partie cylindrique 138 du mandrin 10 est symétrique de la précédente.

On a représenté sur la figure 5 une pièce de révolution bobinée suivant le procédé de l'invention. Cette pièce a été bobinée sur un mandrin 10 que l'on a représenté partiellement. Le mandrin peut être conservé, mais il peut également être retiré une fois le bobinage effectué et la pièce rigidifiée par un traitement approprié. La pièce 40 représente seulement un secteur d'une pièce de révolution. Cependant, on pourrait constituer une pièce de révolution complète en assemblant plusieurs pièces identiques à la pièce 40.

Les épaisseurs utiles de renfort de fibre varient en fonction de la distance au centre de la pièce : elles diminuent vers le bord extérieur.

Dans la plupart des cas, l'épaisseur du renfort bobiné sur le mandrin n'est pas telle que l'on atteigne le centre de celle-ci, c'est-à-dire l'axe B. Par exemple, si le mandrin est un secteur de couronne, la pièce obtenue sera elle-même une couronne ou un secteur d'une couronne ; mais non un cercle ou un secteur d'un cercle. Toutefois, il faut remarquer que grâce à une particularité du dispositif de bobinage selon l'invention, on peut fabriquer des pièces non évidées au centre : on remarque en effet que l'axe B est un axe immatériel. Par conséquent, ceci permet la présence de fibres au centre des pièces.

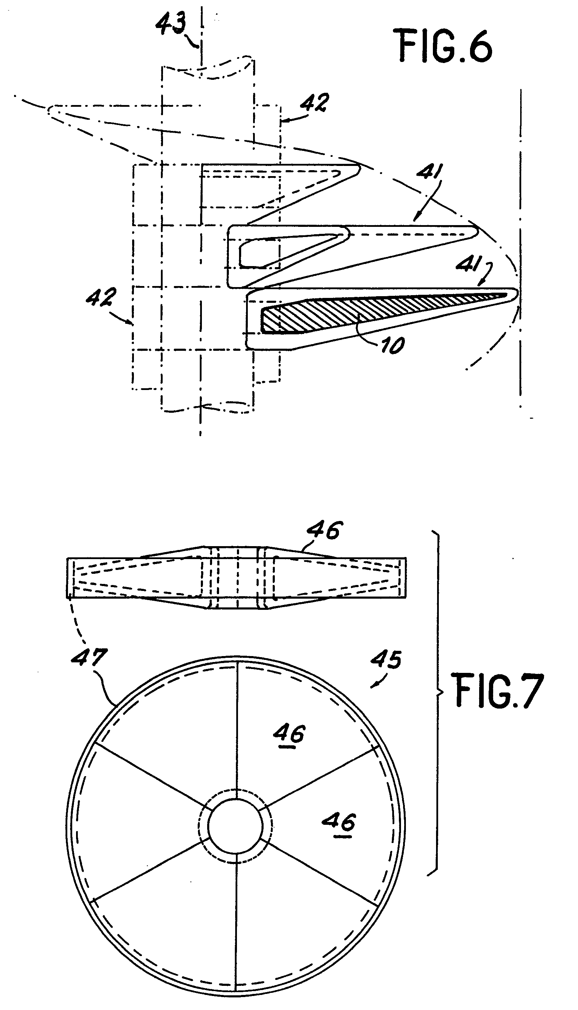

Sur la figure 6, on a représenté un second exemple de pièce bobinée avec le dispositif selon l'invention. Cette pièce est une marche d'escalier à structure radiale. Elle est destinée à être fixée sur un pied central 42 représenté en traits mixtes. On a représenté en traits hachurés une coupe du mandrin 10 utilisé pour réaliser la marche d'escalier 41. Comme on le constate, le point de convergence, situé sur l'axe 43, représenté en traits mixtes, n'est pas atteint. Cependant, comme il a été dit, ce point de convergence pourrait être atteint.

Sur la figure 7, on a représenté un troisième exemple de pièce réalisée conformément au procédé de l'invention. Cette pièce 45 est une roue à inertie modérée. Elle est composée de six secteurs 46 à structure radiale réalisés conformément à l'invention et assemblés au moyen d'une frette de structure circulaire 47. Cette frette 47 pourra être réalisée selon tout procédé connu et en particulier selon le procédé décrit dans le brevet n° 2 359 695 précité.

Selon un quatrième exemple de réalisation (non représenté), la pièce selon l'invention est constituée par une nappe simple découpée avant polymérisation de la résine, amenée préimprégnée entre un poinçon et une matrice, pressée, polymérisée, puis associée à une frette et un matériau composite à structure de type circulaire.

Enfin, il est possible de réaliser des pièces qui ne sont pas de révolution et qui diffèrent donc de celles envisagées précédemment.

La figure 8 montre un cinquième exemple d'une pièce qui n'est pas de révolution. Il s'agit d'une pale 49 : l'inclinaison $\theta$ de son plan médian 50 varie lorsqu'on s'éloigne de l'axe vers la périphérie comme on peut le voir en se reportant à la vue générale 8a et aussi aux dessins 8b1, 8b2, 8b3 et 8b4 qui représentent des coupes par des plans 51, 52, 53, 54 parallèles à l'axe de rotation, situés à des distances croissantes de celui-ci et normaux au rayon médian de la pale ; on constate que les angles $\theta_2$, $\theta_3$, $\theta_4$ vont croissant.

Le mandrin 10 dont l'âme peut être un « nid d'abeille » comporte des parties avant 56 et arrière 57 rapportées correspondant aux bords d'attaque 58 et de fuite 59 ; il pourra rester intégré à la pièce terminée. Dans ce cas, responsable structural important, le bobinage radial assure aussi la cohésion d'autres parties de la structure.

Sur les figures 8b1 à 8b4, on constate également que l'aire 60 de renfort de fibre bobiné reste constante : elle diminue d'épaisseur lorsqu'elle gagne en largeur.

La fabrication de la pale 49 se poursuit par imprégnation par de la résine puis polymérisation dans un moule de forme appropriée. Ainsi, les fibres résistantes constituent le squelette de cette pièce, la résine en forme de galbe répondant aux exigences aérodynamiques.

**Revendications**

1. Dispositif de bobinage d'un fil sur un mandrin en forme de secteur, ledit dispositif comportant un bâti fixe (1), un arbre (4) monté sur le bâti (1) et tournant autour de son axe, l'axe fixe (A), des moyens pour entraîner ledit arbre (4) en rotation, un ensemble tournant (2) solidaire de l'arbre (4) constitué d'un châssis supportant un bras support (12) en forme d'arc de cercle d'axe (B), le bras support (12) portant un mandrin (10) à l'une de ses extrémités, la dimension du mandrin suivant son axe de révolution étant petite par rapport à celle suivant la différence des rayons, des moyens pour guider le bras support (10) relativement au châssis dudit ensemble selon un arc de cercle centré sur l'axe (B), et des moyens pour entraîner en rotation le bras support (12) autour de l'axe (B), caractérisé en ce que lesdits moyens pour entraîner le bras support 12 réalisent un entraînement discontinu, le mouvement de rotation du bras support (12) se produisant lorsque le fil est en contact avec la partie du mandrin (10) orientée selon son axe de révolution et en ce que les moyens pour entraîner en rotation le bras support (12) de manière discontinue sont constitués par une denture (20) taillée sur le bras support (12) et par une vis sans fin (22) entraînée en rotation et engrenant avec le secteur denté (20), ladite vis sans fin (22) étant entraînée en rotation par l'intermédiaire d'une suite cinématique montée dans ledit bâti (2), ladite suite cinématique se composant d'un réducteur (26), d'un inverseur (29) monté sur le bâti (2), d'un couple de pignons coniques à 90° (28, 30) dont l'un (30) d'axe (A) est solidaire du bâti fixe (1) et dont l'autre (28) est immobilisé en rotation sur l'arbre d'entrée (32) du réducteur (26), ladite suite cinématique comportant en outre une roue à rochet (33) immobilisée en rotation sur l'arbre d'entrée (32) du réducteur (26), un doigt (33a) solidaire du bâti fixe (1) engrenant à chaque passage l'ensemble mobile (2) avec la roue (33) et la faisant ainsi tourner d'un angle déterminé.

2. Dispositif de bobinage selon la revendication 1, caractérisé en ce que l'inverseur (29) comporte un point mort pour maintenir le mandrin (10) au repos pendant la rotation de l'ensemble tournant (2) autour de l'axe (A).

**Claims**

1. Apparatus for winding a filament on an arcuate spool, said apparatus comprising a fixed frame (1), a shaft (4) mounted on the frame (1) and rotating around its axis, the fixed axis (A) means for rotatably driving said shaft (4), a rotating assembly (2), integral with the shaft (4) and comprising a chassis supporting a support arm (12) having the form of an arc of a circle of axis (B), the support arm (12) carrying a spool (10) at one of its ends, the dimension of the spool parallel to its axis of revolution being small with respect to the difference of its internal and external radii, means for guiding the support arm (12) relative to the chassis of said assembly along an arc of a circle centred on axis (B), and means for rotatably driving the support arm (12) around axis (B), characterized in that said means for driving the support arm (12) provide discontinuous drive, rotational movement of the support arm (12) being produced when the filament is in contact with the part of the spool (10) oriented parallel to its axis of revolution and in that the means for rotatably driving the support arm (12) in discontinuous manner comprise teeth (20) formed on the support arm (12) and a worm (22) rotatably driven and engaging teeth (20), said worm (22) being rotatably driven by means of a gear train mounted on said frame (2), said gear train comprising a reducing gear (26), an inverter (29) mounted on frame (2), a pair of bevel gears (28, 30) whose axes are at 90° to one another, the axis (A) of one (30) of said bevel gears being integral with the fixed frame (1) and the other (28) being rotationally immobile with respect to the input shaft (32) of the reducing gear (26), said gear train additionally comprising a ratchet wheel (33) rotationally immobile with respect to the input shaft (32) of reducing gear (26), a finger (33a) integral with the fixed frame (1), engaging, at each passage, the movable assembly (2) with the wheel (33), thereby making it turn through a predetermined angle.

2. Winding apparatus according to claim 1, characterized in that the inverter (29) comprises a dead spot to keep the spool (10) at rest during rotation of the rotatable assembly (2) around axis (A).

**Ansprüche**

1. Vorrichtung zum Aufwickeln eines Fadens auf einen sektorförmigen Kern, mit einem feststehenden Gestell (1), einer um ihre Achse, eine feststehende Achse (A) drehbar im Gestell gelagerten Welle (4), Einrichtungen für den Drehantrieb der Welle (4) und mit einer fest mit der Welle (4) verbundenen, drehbaren Baugruppe (2) mit einem Rahmen, einem von diesem getragenen Tragarm (12) von der Form eines Kreisbogens mit einer Achse (B), einem von Tragarm (12) an einem Ende desselben getragenen Wickelkern (10), dessen Abmessung in Richtung seiner Umdrehungsachse klein ist im Vergleich zu der durch den Unterschied seiner Radien bestimmten Abmessung, Einrichtungen zum Führen des Tragarms (10) relativ zum Rahmen der Baugruppe entlang einem um die Achse (B) als Mittelpunkt herum verlaufenden Kreisbogen, und mit Einrichtungen zum In-Drehung-Versetzen des Tragarms (12) um die Achse (B) herum, dadurch gekennzeichnet, daß die Einrichtungen zum In-Drehung-Versetzen des Tragarms (12) einen intermittierenden Antrieb bewirken, wobei die Drehbewegung des Tragarms (12) stattfindet, wenn sich der Faden mit dem in Richtung der Umdrehungsachse des Wickelkerns (10) ausgerichteten Teil desselben in Berührung befindet, und daß die Einrichtungen zum intermittierenden In-Drehung-Versetzen des Tragarms (12) eine am Tragarm (12) ausgebildete Verzahnung (20) und eine drehend angetriebene, mit der Verzahnung (20) in Eingriff befindliche Schnecke (22) umfassen, wobei der Drehantrieb der Schnecke über eine im Rahmen (2) gelagerte kinematische Anordnung erfolgt, welche sich aus einem Untersetzungsgetriebe (26), einem im Rahmen (2) montierten Umkehrgetriebe (29) und einem einen Winkel von 90° einschließenden Kegelradpaar (28, 30) zusammensetzt, von denen das eine Kegelrad (30) um die Achse (A) zentriert fest mit dem feststehenden Gestell (1) verbunden und das andere Kegelrad (28) drehfest auf der Eingangswelle (32) des Untersetzungsgetriebes (26) befestigt ist, wobei die kinematische Anordnung ferner ein drehfest auf der Eingangswelle (32) des Untersetzungsgetriebes (26) befestigtes Steigrad (33) sowie einen fest mit dem feststehenden Gestell (1) verbundenen Finger (33a) aufweist, welcher bei jedem Durchgang der beweglichen Baugruppe (2) in Eingriff mit dem Steigrad (33) kommt und es um einen vorbestimmten Winkel fortdreht.

2. Aufwickelvorrichtung nach Anspruch 1, dadurch gekennzeichnet, daß das Umkehrgetriebe (29) einen Totpunkt zum Halten des Wickelkerns (10) in einer Ruhestellung während der Drehung der drehbaren Baugruppe (2) um die Achse (A) herum aufweist.

# FIG.1

FIG.1a

FIG.8a

FIG.8b

FIG.4a

# FIG.2

# FIG.3

FIG.5

FIG.4

**FIG.6**

43

42

41

42

41

10

**FIG.7**

46

47

45

46

46